# EUROPEAN PATENT APPLICATION

(11) **EP 3 940 362 A1**
(43) Date of publication of application: **19.01.2022**
(21) Application number: 21179853.3
(22) Date of filing: 16.06.2021
(51) Int. Cl.: G01M 3/22, B25J 15/00

(54) **CLAMP FOR INSPECTING WELDS AND ROBOT USING SUCH CLAMP**

(30) Priority: 14.07.2020 IT 202000017014
(71) Applicant: Noci, Egidio, 24043 Caravaggio, Frazione Vidalengo BG (IT)
(72) Inventor: Noci, Egidio, 24043 Caravaggio, Frazione Vidalengo BG (IT)
(74) Representative: Modiano, Micaela Nadia

(57) **Abstract**

A clamp (1) for inspecting welds on domestic and industrial refrigerators, heat pumps and the like and components thereof, which comprises a clamp body (2) provided with a pair of opposing fingers (2a, 2b), each finger provided at one end with respective shells (3) that are adapted to adapt around a pipe (4) of which a weld is to be inspected along the entire circumference, the fingers (2a, 2b) being pneumatically actuatable in order to be tightened around the pipe (4).

## Description

The present invention relates to a clamp for inspecting welds and a robot using the clamp. More specifically, the invention relates to a clamp for inspecting welds on domestic and industrial refrigerators, heat pumps and the like and components thereof, and which is adapted to be used in applications that involve welded pipes which need to be checked in order to verify the seal thereof.

As is known, the pipe welds used in domestic and industrial refrigerators, heat pumps and the like and components thereof must be carefully inspected in order to guarantee their seal. In fact, a coolant gas or the like flows in such pipes, and leaks thereof from the pipe must be scrupulously prevented.

There are substantially two methods of inspecting pipe welds. The first method uses a form of clamp with shells which adhere to the pipe to be inspected, and which allow the accumulation of any gas that exits from the weld join.

Such solution entails sampling the gas for the analysis thereof by one of the two shells and only at one point of one of the two shells. This does not make it possible to inspect the entire circumference of the pipe in a reliable manner.

The second method is to use a "sniffer" that makes it possible to continuously sniff the join, but which is capable of checking only a portion of that join, because the tip of the sniffer cannot envelop the pipe.

Currently, clamps applied to robots use only the sniffer method, but do not employ the clamp with the shells.

The aim of the present invention is to provide a clamp for inspecting welds on domestic and industrial refrigerators, heat pumps and the like and components thereof that makes it possible to execute a check on the entire surface of the pipe affected by the weld, so as to have a capability for sampling gas on the entire circumferential weld of the pipe.

Within this aim, an object of the present invention is to provide a clamp for inspecting welds on domestic and industrial refrigerators, heat pumps and the like and components thereof, that can be actuated by a robot.

Another object of the present invention is to provide a clamp for inspecting welds that can combine two separate inspection techniques in the same clamp.

Another object of the present invention is to provide a clamp for inspecting welds that is highly reliable, easily and practically implemented, and of low cost.

This aim and these and other objects which will become better apparent hereinafter are achieved by a clamp for inspecting welds on domestic and industrial refrigerators, heat pumps and the like and components thereof, characterized in that it comprises a clamp body provided with a pair of opposing fingers, each finger provided at one end with respective shells that are adapted to adapt around a pipe of which a weld is to be inspected along the entire circumference, said fingers being pneumatically actuatable in order to be tightened around said pipe.

Further characteristics and advantages of the invention will become better apparent from the description of preferred, but not exclusive, embodiments of the clamp according to the invention, which are illustrate by way of non-limiting example in the accompanying drawings, wherein:

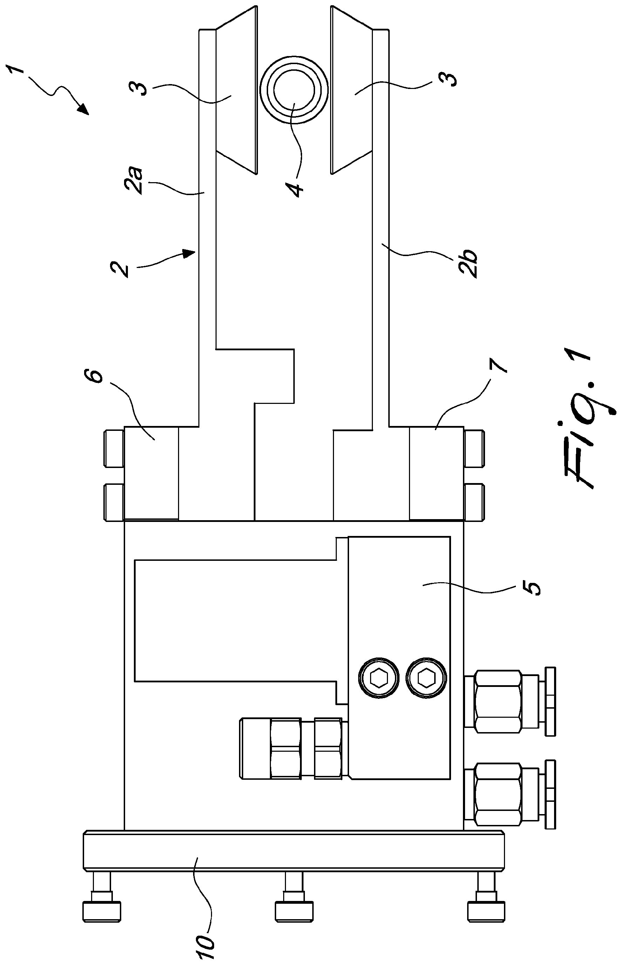

Figure 1 is a view of a first embodiment of a clamp according to the present invention;
Figure 2 is a view of a second embodiment of a clamp according to the invention.

With reference to the figures, the clamp for inspecting welds according to the present invention, generally designated by the reference numeral 1, comprises a clamp body 2 constituted by a pair of fingers 2a, 2b, which can be moved mutually closer, each one provided at one end with a shell 3 made of rubber, which enables the accumulation of any leak of gas from the weld to be inspected. The shells 3 are therefore facing each other and make it possible to be arranged around a pipe 4 the weld of which is to be inspected.

The rubber shells 3 are adapted to contain inside them a tracer gas such as, for example, helium, hydrogen, or any coolant gas, which is loaded into the pipe the weld of which is to be inspected and which, if there is a leak in the pipe, accumulates in the two shells 3.

The clamp according to the invention further has a solenoid valve for analysis 5 which is connected to an analysis device, not shown.

The analysis device comprises a sensor adapted to measure the concentration of a tracing gas contained inside the pipe to be inspected.

The clamp according to the invention is activated pneumatically by way of actuators 6 and 7, which enable the closing of the fingers 2a and 2b around the pipe 4 the weld of which is to be inspected.

The sampling of the gas occurs at two central regions of the shells 3, and also at the zone in the middle of the join between the two shells 3.

In this manner, there are three sampling points, although at least two sampling points are already sufficient to verify the entire circumferential weld of a pipe 4.

The clamp according to the invention further comprises an adapter 10 which enables connection to a robot 11, which, therefore, pneumatically actuates the fingers 2a and 2b of the clamp according to the invention.

The rubber shells 3 can adapt around any pipe, conforming to any defects of the pipe.

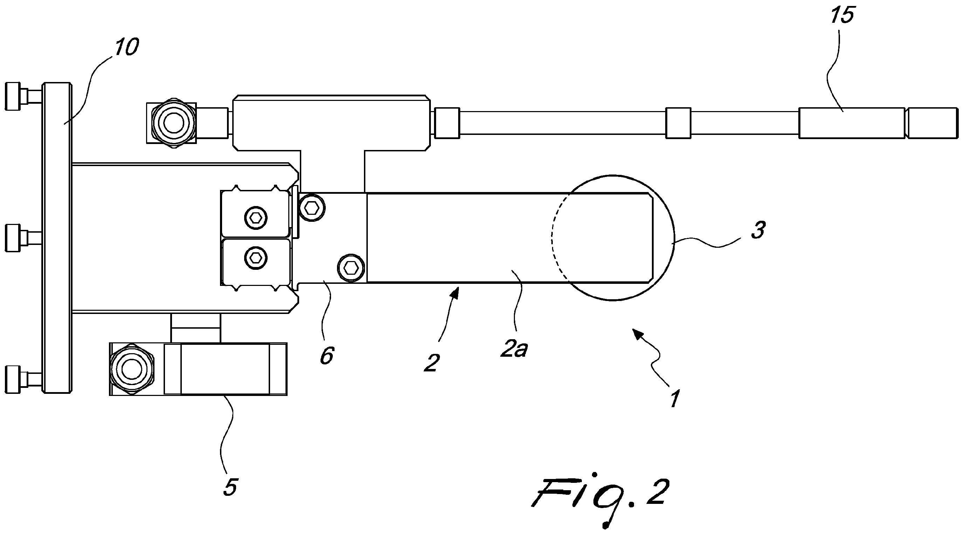

The clamp according to the invention can further comprise, in combination with the fingers 2a, 2b with the corresponding rubber shells 3, a "sniffer" probe 15 (see Figure 2) which is connected to the clamp body, and, by virtue of its long and thin shape, makes it possible to test pipes 4 that are in very internal positions that are substantially inaccessible to the fingers 2a, 2b of the clamp.

Such a "sniffer" 15 is also connected to an analysis device, not shown.

In substance, therefore, operation of the clamp according to the invention is as follows.

A tracer gas is introduced into a pipe 4 to be inspected, i.e. for which the welds are to be inspected in order to verify their seal.

Using the clamp with the fingers 2a, 2b arranged about the pipe 4, the rubber shells 3 are made to adhere to the pipe 4 and they enable the accumulation of tracer gas that may escape from the weld, such tracer gas is then analyzed using an analysis device, by sampling it at at least two points of the shells, and preferably at two points of the shells and also at the join point between the two shells 3.

The clamp according to the invention is conveniently actuated by a robot via an adapter 10 that enables the connection thereof to the robot.

By using the fingers 2a, 2b with the corresponding shells 3, it is possible to inspect welds along the entire circumferential extension thereof, because the two shells 3 adhere perfectly to the pipe 4 to be inspected and entirely envelop it.

If the pipe 4 is in a position that is difficult for the fingers 2a, 2b of the clamp to reach, it is possible to use the "sniffer" probe 15 associated with the clamp body, which, by virtue of its length and contained size, makes it possible to reach pipes located even in hard-to-reach positions.

Both with the shells 3 and with the sniffer probe, it is possible to carry out washing of the nozzles of the shells and of the sniffer probe during the steps where the clamp is not used to aspire gas and therefore it is not in the leak detection phase.

In this case the shells 3 and/or the sniffer probe are actuated as nozzles for emitting compressed air, thus blowing instead of aspirating, in order to clean themselves.

In practice it has been found that the clamp according to the invention fully achieves the set aim and objects, in that it can be actuated pneumatically around a pipe with its fingers, with the corresponding shells, so as to inspect the welds thereof along the entire circumference of the pipe.

The shells adapt perfectly to the weld seam of the pipe, without damaging the seam and without moving it.

The clamp can be actuated by a robot and therefore it can be actuated automatically.

The clamp thus conceived is susceptible of numerous modifications and variations, all of which are within the scope of the appended claims.

Moreover, all the details may be substituted by other, technically equivalent elements.

In practice, the materials used, as well as the contingent shapes and dimensions, may be any according to the requirements and to the state of the art.

The disclosures in Italian Patent Application No. 102020000017014 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A clamp (1) for inspecting welds on domestic and industrial refrigerators, heat pumps and the like and components thereof, **characterized in that** it comprises a clamp body (2) provided with a pair of opposing fingers (2a, 2b), each finger provided at one end with respective shells (3) that are adapted to adapt around a pipe (4) of which a weld is to be inspected along the entire circumference, said fingers (2a, 2b) being pneumatically actuatable in order to be tightened around said pipe.

2. The clamp according to claim 1, **characterized in that** it comprises at least two gas sampling points for the gas accumulated inside said shells, at said shells.

3. The clamp according to claim 1 or 2, **characterized in that** it comprises a further gas sampling point at the join line between said shells (3).

4. The clamp according to one or more of the preceding claims, **characterized in that** it comprises an analysis device which is connected to a solenoid valve (5) which in turn is connected to said gas sampling points.

5. The clamp according to one or more of the preceding claims, **characterized in that** it comprises an adapter (10) that is adapted to interface said clamp body (2) in a robot (11).

6. The clamp according to one or more of the preceding claims, **characterized in that** said shells (3) are adapted to conform to said pipe (4) with said weld to be inspected.

7. The clamp according to one or more of the preceding claims, **characterized in that** it comprises a sniffer probe (15) that is adapted to be connected to the clamp body (2).

8. The clamp according to one or more of the preceding claims, **characterized in that** said sniffer probe (15) is connected to an analysis device.

9. The clamp according to one or more of the preceding claims, **characterized in that** said analysis device comprises a sensor adapted to measure the concentration of a tracing or refrigerating gas contained inside said pipe (4) to be inspected.

10. The clamp according to one or more of the preceding claims, **characterized in that** said shells (3) and/or said sniffer probe (15) are configured to blow compressed air, in order to allow a washing of the nozzles of said shells and/or of said sniffer probe.

11. A robot (11), **characterized in that** it comprises a clamp (1) according to one or more of the preceding claims, which is connected to said robot by way of an adapter (10).
